# EUROPÄISCHE PATENTSCHRIFT

(11) **EP 0 470 620 B1**
(45) Veröffentlichungstag und Bekanntmachung des Hinweises auf die Patenterteilung: **13.04.1994**
(21) Anmeldenummer: 91113342.9
(22) Anmeldetag: 08.08.1991
(51) Int. Cl.: C04B 35/56, C04B 41/87

(54) **Verfahren zur Herstellung von Formkörpern aus siliciuminfiltriertem Siliciumcarbid**
Method of making shaped silicon infiltrated silicon carbide bodies
Procédé de fabrication de corps moulés en carbure de silicium infiltré du silicium

(30) Priorität: 09.08.1990 DE 4025238
(43) Veröffentlichungstag der Anmeldung: 12.02.1992
(73) Patentinhaber: Hoechst CeramTec Aktiengesellschaft, 95100 Selb (DE)
(72) Erfinder: Benker, Werner, W-8672 Selb (DE); Schmidt, Jürgen, W-8590 Marktredwitz (DE)
(74) Vertreter: Hoffmann, Peter, Dipl.-Chem.

(56) Entgegenhaltungen:
- DE-A- 2 910 628

## Beschreibung

Die Erfindung betrifft ein Verfahren zum Silizieren von porösen Formkörpern aus Siliziumcarbid/Kohlenstoff unter Verwendung einer dichten Packung von porösen Ringen aus siliziuminfiltriertem Siliziumcarbid, als Infiltrationshilfsmittel.

Bei der Infiltration von Siliziumcarbid-Formkörpern mit Silizium bilden sich oftmals Zonen mit besonders hohem Siliziumgehalt, sogenannte silizierte Bahnen, und daneben untersilizierte Bauteile. Beides führt zu Ausschuß.

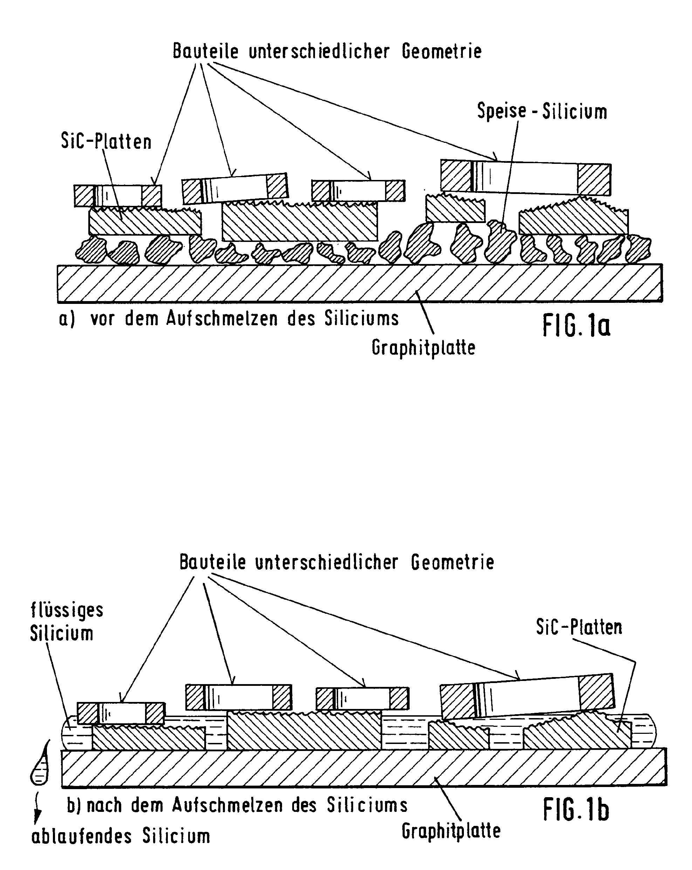

Nach dem Verfahren der EP-A-0 134 254 erfolgt die Infiltration des Siliziumcarbid/Kohlenstoff-Formkörpers über eine poröse Siliziumcarbidplatte, die mit einer Beschichtung aus Bornitrid, Siliziumcarbid und Kohlenstoff versehen ist. Unterhalb der Siliziumcarbidplatte und gegebenenfalls seitlich von ihr befindet sich (vor dem Aufheizen des Ofens) stückiges elementares Silizium. Es hat sich jedoch gezeigt, daß die Verwendung von plattenförmigen SiSiC-Infiltrationshilfsmitteln Nachteile aufweist. Wenn das Silizium, das sich zwischen den Brennplatten und den als Infiltrationshilfsmittel benutzten Siliziumcarbid-Platten befindet, aufgeschmolzen ist, so sinken die Platten aufgrund der Schwerkraft durch das (spezifisch leichtere Silizium) und verdrängen dieses. Aufgrund der Oberflächenspannung können sich auf der Brennplatte Siliziumspiegel von bis zu 5 mm Höhe ausbilden. Wenn sich nach dem Durchsinken der als Infiltrations-Hilfsmittel benutzten Siliziumcarbidplatten ein höherer Spiegel ausbilden würde, so würde dies zum Ablaufen des Siliziums von der Platte führen (Figur 1a und b). Da die Menge des Siliziums auf der Brennplatte so bemessen wird, daß sie gerade ausreicht, um die darauf befindlichen Bauteile vollständig zu infiltrieren und auch die Verdampfungsverluste auszugleichen, führt das Ablaufen von Silizium zu einer unvollständigen Infiltration von mindestens einigen Bauteilen. Ein vorsorgliches Überangebot an Silizium auf der Brennplatte verbietet sich, da sonst die Bauteile nach dem Abkühlen so fest mit dem Infiltrationshilfsmittel verbunden sind, daß ein Ablösen ohne Beschädigung nicht möglich ist. Wenn das Silizium von einer Brennplatte auf eine darunter liegende läuft, so tritt der Effekt des Verklebens dort auf.

Wie oben erwähnt, steigt durch das Einsinken der SiSiC-Platten in das schmelzflüssige Silizium der Siliziumpegel. Dies kann dazu führen, daß bei Verwendung zu niedriger Platten die Bauteile in direkten Kontakt mit dem geschmolzenen Silizium gelangen. Dann kann es zu einer ungleichmäßigen Infiltration und dem Auftreten von Spannungen im Bauteil kommen, was sich häufig durch Rißbildung äußert. Die entstandenen Risse füllen sich mit Silizium und sind im Bauteil als silizierte Bahnen sichtbar. Verhindert werden könnte dieser Effekt durch eine Reduzierung der Siliziummenge je Brennplatte oder durch eine Erhöhung der Dicke der Siliziumcarbid-Platten. Beide Möglichkeiten verringern jedoch die Wirtschaftlichkeit des Verfahrens. Das beschriebene Verfahren unter Verwendung von SiSiC-Platten wird auch verwendet, um Formkörper mit ebener Auflagefläche zu silizieren.

Wegen der geringen Dicke der verwendeten porösen Trägerplatte und dem geringen Abstand zum flüssigen Silizium war es jedoch schwierig, eine gleichmäßige Silizierung zu erreichen. Dieses Problem läßt sich jedoch mindestens teilweise dadurch lösen, daß man die Trägerplatte, auf einem SiSiC-Behälter mit flüssigem Silizium anordnet (DE-A- 37 19 606), so daß sie nicht mehr in direktem Kontakt mit dem flüssigen Silizium steht.

Darüberhinaus hat eine plattenförmige Unterlage noch den Nachteil, daß der silizierte Formkörper mit seiner ebenen Auflagefläche an ihr klebt und daher nur schwer zu entfernen ist.
Aus der DE-A- 2 910 628 ist ein Verfahren bekannt, bei dem ein erster ringförmiger Rohling aus 70 bis 95% Siliziumcarbid, Rest Kohlenstoff, in Kontakt mit einem zweiten ringförmigen Preßling aus 87 bis 97 % Silizium, Rest Kohlenstoff, siliziert wird. Beim Erhitzen entsteht aus dem zweiten Preßling eine hochporöse brüchige Grundmasse aus Siliziumcarbid, die das überschüssige Silizium gut in den ersten Siliziumcarbid/Kohlenstoff-Rohling leiten kann. Nachteilig ist, daß die brüchige Grundmasse nur jeweils einmal verwendet werden kann und dann entfernt werden muß. Günstig ist aber, daß Unterlage und Formkörper geometrisch aneinander angepaßt sind. Es bestand daher die Aufgabe, ein Verfahren anzugeben, bei dem nach dem Infiltrationsprozeß ein leichtes Ablösen der Formkörper möglich ist, ohne daß sie durch Abplatzungen beschädigt werden und das Infiltrationshilfsmittel wiederholt einsetzbar ist. Die Erfindung beruht auf der Erkenntnis, daß die Kontaktflächen des zu silizierenden Rohlings mit dem Träger, d.h. dem Infiltrationshilfsmittel, möglichst klein sein sollen.

Es wurde nun ein Verfahren zum Silizieren von porösen Formkörpern aus Siliziumcarbid/Kohlenstoff gefunden, bei dem man ein Gemisch aus Siliziumcarbid-Pulver, organischem Bindemittel und gegebenenfalls Kohlenstoff zu einem Grünkörper verformt, man das Bindemittel des Grünkörpers in einer nichtoxidierenden Atmosphäre durch Verkokung bei ca. 1000°C entfernt und man den erhaltenen Rohling durch Einwirken von geschmolzenem Silizium siliziert, wobei der erhaltene Rohling auf einem porösen SiSiC-Träger aufliegt, der mit seinem unteren Teil mit dem flüssigen Silizium in Kontakt steht und die Anordnung aus SiSiC-Träger und erhaltenem Formkörper nach beendeter Silizierung abgekühlt wird. Dabei wird als Träger eine dichte Packung von porösen Ringen aus SiSiC verwendet, die parallel zueinander und senkrecht auf einer mit Silizium beschickten, für flüssiges Silizium undurchlässigen Brennplatte aus Graphit angeordnet sind.

Es können auch mehrere Ringe einen einzigen Rohling tragen. Wenn der Formkörper mindestens eine ebene Außenfläche aufweist, mit der er auf den Ringen liegt, ist es vorteilhaft, wenn die Ringe gleiche Höhe aufweisen. Die gemeinsame Kontaktfläche zwischen Trägerringen und aufgelegtem siliziertem Rohling (und damit die Schwierigkeiten beim Entfernen des Rohlings nach dem Silizieren) können dadurch verringert werden, daß die Ringflächen oben abgerundet sind.

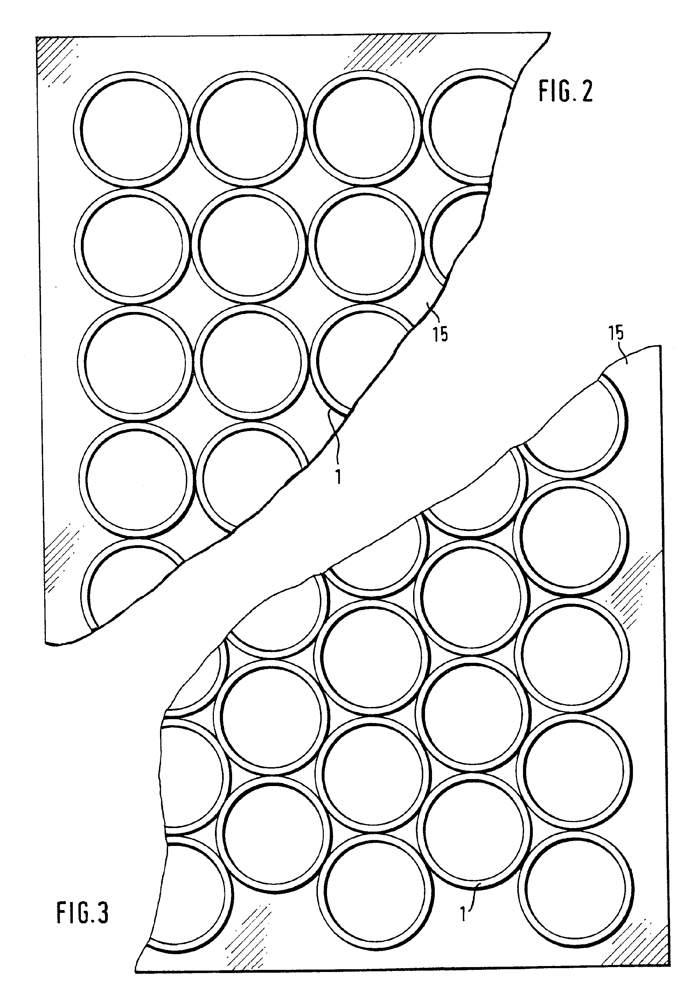

Es ist möglich, daß die Ringe unten abgeschlossen sind und in das Innere der so entstehenden Behälter ebenfalls Silizium eingefüllt wird. Falls der Rohling eine Kugelform hat, soll der Kugeldurchmesser größer sein als der Innendurchmesser des Rings und jeweils ein kugelförmiger Rohling mit einem Trägerring in Kontakt stehen. Um die Infiltration der kugelförmigen Rohlinge zu beschleunigen, kann man Ringe einsetzen, die innen angefast sind, so daß die Kugeln in flächigem Kontakt mit den Trägerringen stehen. Die Figuren 2 und 3 zeigen zwei dichte Packungen von einzelnen Rohren (1), die auf einer Graphitplatte (15) aufgestellt sind.

Die Geschwindigkeit mit der das geschmolzene Silizium die SiSiC-Ringe durchwandert, läßt sich steuern durch die Menge und Größe des Porendurchmessers im Hilfsmittel. Dieser Effekt wird (für die Silizierung eines Grünkörpers) bereits beschrieben in Special Ceramics 5, 1970, in Zusammenhang mit Figur 6.

Eine Verkleinerung des Porendurchmessers bremst den Siliziumfluß, eine Vergrößerung beschleunigt ihn. Die Größe der Porenradien hängt von den bei der Herstellung der Brennhilfsmittel (Ringe) eingesetzten Siliziumcarbid-Körnungen ab. Grobe Körnungen ergeben große Poren, feine Körnungen ergeben kleine Poren. Durch eine geeignete Auswahl der Siliziumcarbidkörnungen kann somit erforderlichenfalls ein großer Bereich von Porenradien-Verteilungen eingestellt werden.

## Patentansprüche

1. Verfahren zum Silizieren von porösen Formkörpern aus Siliziumcarbid/Kohlenstoff, bei dem man ein Gemisch aus Siliziumcarbid-Pulver, organischem Bindemittel und gegebenenfalls Kohlenstoff zu einem Grünkörper verformt, man das Bindemittel des Grünkörpers in einer nicht oxidierenden Atmosphäre durch Verkokung bei ca. 1000 °C entfernt und man den erhaltenen Rohling durch Einwirken von geschmolzenem Silizium siliziert, wobei der erhaltene Rohling auf einem porösem SiSiC-Träger aufliegt, der mit seinem unteren Teil mit dem flüssigem Silizium in Kontakt steht und die Anordnung aus SiSiC-Träger und erhaltenem Formkörper nach beendeter Silizierung abgekühlt wird, dadurch gekennzeichnet, daß als Träger eine dichte Packung von porösen Ringen (1) aus SiSiC verwendet wird, deren Symmetrieachsen parallel zueinander und senkrecht auf der Ebene einer mit Silizium beschickten für flüssiges Silizium undurchlässigen Brennplatte (15) aus Graphit angordnet sind.

2. Verfahren nach Anspruch 1, dadurch gekennzeichnet, daß mehrere Ringe einen Rohling tragen, die Ringe gleiche Höhe aufweisen und der Formkörper mindestens eine ebene Außenfläche aufweist mit der er auf den Ringen liegt.

3. Verfahren nach Anspruch 1, dadurch gekennzeichnet, daß die Ringflächen oben abgerundet sind.

4. Verfahren nach Anspruch 1, dadurch gekennzeichnet, daß die Ringe unten abgeschlossen sind und in das Innere der so entstehenden Behälter ebenfalls Silizium eingefüllt wird.

5. Verfahren nach Anspruch 1, dadurch gekennzeichnet, daß der Rohling eine Kugelform hat, der Kugeldurchmesser größer ist als der Innendurchmesser des Rings und ein kugelförmiger Rohling jeweils nur mit einem Trägerring in Kontakt steht.

6. Verfahren nach Anspruch 5, dadurch gekennzeichnet, daß die Ringe innen angefast sind, so daß die Kugeln in flächigem Kontakt mit den Trägerringen stehen.

## Claims

1. A process for silicizing a porous molding of silicon carbide/carbon, in which a mixture of silicon carbide powder, organic binder and, if appropriate, carbon is molded to give a green compact, the binder of the green compact is removed by carbonization at about 1000°C in a non-oxidizing atmosphere and the resulting blank is silicized by the action of molten silicon, while the resulting blank rests on a porous SiSiC carrier, whose lower part is in contact with the molten silicon, and the assembly of SiSiC carrier and resulting molding being cooled after completion of the silicization, wherein the carrier used is a close packing of porous SiSiC rings (1) whose axes of symmetry are arranged mutually parallel and perpendicularly on the plane of a graphite firing plate (15) which is charged with silicon and is impermeable to molten silicon.

2. The process as claimed in claim 1, wherein a plurality of rings carry one blank, the rings have the same height and the molding has at least one plane outer surface, with which it rests on the rings.

3. The process as claimed in claim 1, wherein the ring surfaces are rounded at the top.

4. The process as claimed in claim 1, wherein the rings are closed at the bottom and the interior of the containers thus formed is likewise filled with silicon.

5. The process as claimed in claim 1, wherein the blank has a spherical shape, the sphere diameter is greater than the internal diameter of the ring, and each spherical blank is in contact with only one carrier ring.

6. The process as claimed in claim 5, wherein the rings are chamfered on the inside, so that the spheres are in areal contact with the carrier rings.

## Revendications

1. Procédé permettant de silicer des corps moulés poreux en carbure de silicium/carbone selon lequel on réalise un mélange composé de poudre de carbure de silicium, d'un liant organique et éventuellement de carbone pour en faire une ébauche "verte", on élimine le liant de l'ébauche "verte" dans une atmosphère non oxydante par cokéfaction à 1000° C environ, puis on silice l'ébauche obtenue sous l'action du silicium en fusion, I'ébauche obtenue se trouvant sur un support de SiSiC poreux qui est en contact par sa partie inférieure avec le silicium liquide, et la structure comportant le support SiSiC ainsi que le corps moulé obtenu étant refroidie une fois la silication achevée, caractérisé par le fait que l'on utilise comme support un ensemble compact d'anneaux poreux (1) en SiSiC, dont les axes symétriques sont disposés parallèlement les uns par rapport aux autres et dans le sens vertical sur le plan d'une plaque de cuisson (15) en graphite revêtue de silicium et imperméable au silicium liquide.

2. Procédé selon la revendication 1, caractérisé par le fait que plusieurs anneaux supportent une ébauche, que ces anneaux présentent la même hauteur et que le corps moulé présente au moins une surface extérieure plane par laquelle il repose sur les anneaux.

3. Procédé selon la revendication 1, caractérisé par le fait que les surfaces des anneaux sont arrondies sur le dessus.

4. Procédé selon la revendication 1, caractérisée par le fait que les anneaux sont obturés sur le dessous et que l'intérieur du récipient ainsi formé est également rempli de silicium.

5. Procédé selon la revendication 1, caractérisé par le fait que l'ébauche a une forme sphérique, que le rayon de la sphère est supérieur au diamètre intérieur de l'anneau et que chaque ébauche n'est à chaque fois en contact qu'avec un seul anneau porteur.

6. Procédé selon la revendication 5, caractérisé par le fait que les anneaux sont biseautés à l'intérieur de sorte que les sphères sont en contact plan avec les anneaux porteurs.
